# EUROPEAN PATENT SPECIFICATION

(11) **EP 2 385 017 B1**
(45) Date of publication and mention of the grant of the patent: **11.12.2013**
(21) Application number: 10004757.0
(22) Date of filing: 05.05.2010
(51) Int. Cl.: C01B 33/107

(54) **Process for purifying silicon source material by high gravity roating packed beds**
Verfahren zur Aufreinigung von Siliziumquellmaterial durch rotierende Festbetten mit hoher Schwerkraft
Procédé de purification de matériau de source de silicone par des lits emballés à rotation haute gravité

(43) Date of publication of application: 09.11.2011
(73) Proprietor: Su, Shyang, Taipei City 10646 (TW); Su, Yiheng, Taipei City 10646 (TW); Vukelic, Michael, Hsinchu City 300 (TW)
(72) Inventor: Su, Shyang, Taipei City 10646 (TW); Su, Yiheng, Taipei City 10646 (TW); Vukelic, Michael, Hsinchu City 300 (TW)
(74) Representative: Ter Meer Steinmeister & Partner

(56) References cited:
- WO-A2-2006/054325
- US-A- 4 283 255
- US-A- 4 374 110

## Description

### BACKGROUND OF THE INVENTION

### Field of the invention

The present invention relates to a process for purifying silicon source materials, and more particularly to a process for purifying trichlorosilane or mixtures of trichlorosilane and silicon tetrachloride by high gravity rotating packed bed.

### Description of Related Prior Art

Electronic grade polysilicon (EGS) can be obtained from trichlorosilane or mixtures of trichlorosilane and silicon tetrachloride after removing impurities such as boron and phosphorous. Most impurities can be readily removed from trichlorosilane or silicon tetrachloride by distillation. Trace impurities of boron or phosphorous which are usually present in the form of BCl₃, PCl₃, B₂H₆ or PH₃, however, to reduce such contamination to an acceptably low level by distillation would require several sequential distillation steps. One reason is that the bubble of the impurity gases is not easy to pump out from the liquid state of trichlorosilane and silicon tetrachloride, and the impurity gas may dissolve in the liquid. The other reason is that the boiling point of BCl₃ (12.5°C) and PCl₃ 74.2°C is not high enough nor low enough and may coming out with trichlorosilane when the temperature rise above 32°C to extract trichlorosilane.

U.S. Pat. 5,616,245 to Albrecht et al. teaches a high gravity separator to separate solid materials. Other process has been proposed for purifying water to remove out the oxygen or other gas with a high gravity separator. U.S. Pat. 4,283,255 to Ramshaw et al. teaches a process and apparatus for effecting mass transfer between two fluid phases by using a rotating element, but none of the prior arts using rotating element is used to remove the impurities in silicon source materials. U.S. Pat. 4,374,110 and 4,409,195 to Darnell et al. teaches a process to purify silicon source materials by reacting small amounts of oxygen with trichlorosilane in gas state at a temperature between 170°C or 60°C to 300°C.

It is desirable to have a purification process which achieves a still higher level of purification and does not require the time and expense of multiple distillation and high temperature reaction.

### OBJECTS OF THE INVENTION

It is therefore an object of the invention to provide an improved process for purifying silicon source materials.

It is another object of the invention to provide an improved process for purifying trichlorosilane.

It is a further object of the invention to provide an improved process for purifying silicon tetrachloride.

It is a still further object of the invention to provide an improved process for purifying mixture of trichlorosilane and silicon tetrachloride

It is yet a further object of the invention to provide an improved process for removing boron and phosphorous impurities in gas or liquid from silicon source at lower temperature.

### DISCLOSURE OF THE INVENTION

The present invention teaches a process for purification of silicon source material including trichlorosilane and silicon tetrachloride by two high gravity rotating packed beds, comprising the steps of: Passing the silicon source material in liquid state through high gravity rotating packed beds with spongy metal, the high gravity rotating packed beds are at a temperature lower than the boiling point of the silicon source material, the impurities vapor and the other chlorosilane or silane are separated by pumping out for re-use or abandonment; Collecting the liquid state purified silicon source material having impurities with higher boiling point than the silicon source material; Distilling to remove the siloxane complexes from the silicon source material.

In the process for purification of silicon source material including trichlorosilane and silicon tetrachloride by high gravity rotating packed beds according to the present invention for removing impurities including one or more of boron, phosphorous, arsenic and aluminum in the form of chlorides, hydrides, or intermediate compounds containing both hydrogen and chlorine from the silicon source material, oxygen is fed to the high gravity rotating packed bed from the rim, and is present in a ratio with trichlorosilane of about 0.005 to 0.5 mole by control the flow rate of trichlorosilane and oxygen, thus forming impurity containing siloxane complexes, then collecting the liquid state purified silicon source material having impurities containing siloxane complexes with higher boiling point than the silicon source material, finally distilling to remove the siloxane complexes from the silicon source material.

### BRIEF DESCRIPTION OF THE DRAWING

FIG. 1 shows a cross-sectional view of the high gravity rotating packed beds used in the present invention.
FIG. 2 shows a top-view of the high gravity rotating packed beds used in the present invention.

### DETAIL DESCRIPTION OF THE PRESENT INVENTION

The foregoing and other advantages of the invention will be more fully understood with reference to the description of the best embodiment and the drawing as the following description.

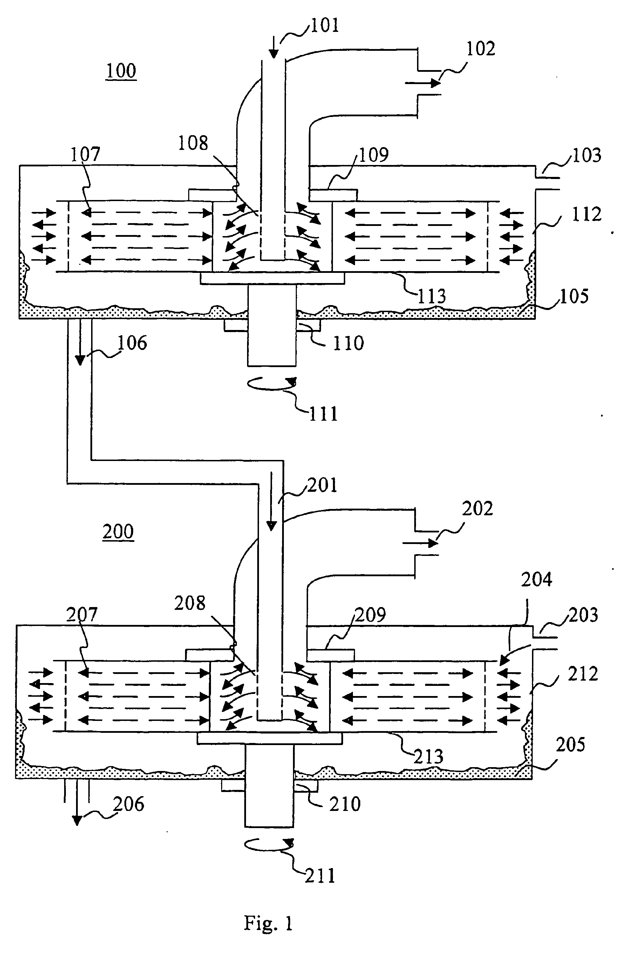

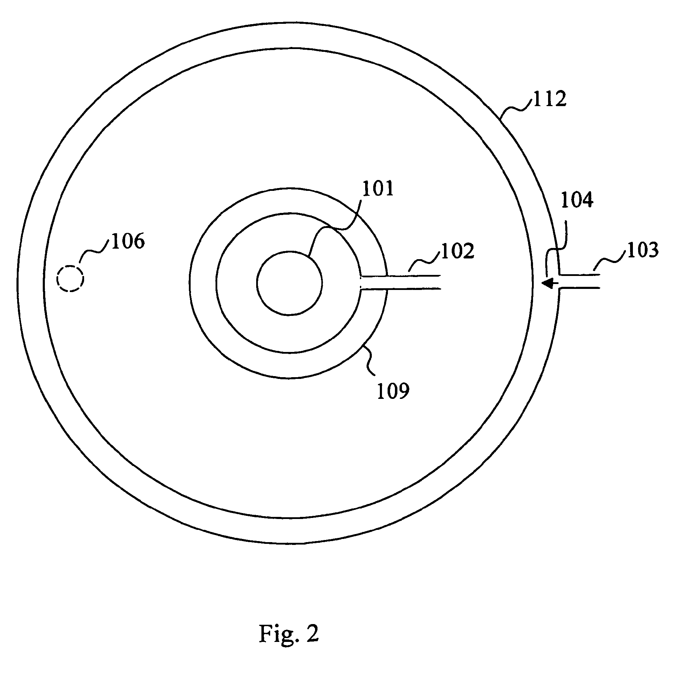

The preferred embodiment of present invention is illustrated in FIG. 1. FIG. 1 shows a cross-sectional view of high gravity rotating packed beds used in the present invention. FIG. 2 shows a top-view of the high gravity rotating packed beds used in the present invention. A first high gravity rotating packed bed 100 has a chamber 112, a silicon source inlet 101 is used to feed the liquid state silicon source material such as trichlorosilane, silicon tetrachloride or mixture of trichlorosilane and silicon tetrachloride, the flow rate of this silicon source inlet 101 can be controlled by a controller (not shown), a gas outlet 102 is connected to a pump (not shown) to pump out the gas state impurities. As the rotor 113 is driving by the rotation axis 111 within the seal 110 in a speed of about 1500rpm, The inlet liquid silicon source is coming out from the distributor 108 inside a rotor 113 and swing out by the high gravity force, in the way of outgoing, the liquid is become droplet or thin film by the spongy metal filler 107 in the rotor 113, so that the gas state impurities are easily separated and are pumping out via the gas outlet 102. No bubble nor solution can exist in the liquid state silicon source material, the purified liquid state silicon source material 105 is coming out via the silicon source material outlet 106.

A second high gravity rotating packed bed 200 has a chamber 212, a silicon source inlet 201,is used to feed the liquid state silicon source material from the silicon source material outlet 106, an oxygen inlet 203 is used to feed in oxygen, and is installed at the upper rim of the chamber 212, the flow rate of this oxygen inlet 203 can be controlled by a controller (not shown), a gas outlet 202 is connected to a pump (not shown) to pump out the gas state impurities and the surplus oxygen, As the rotor 213 is driving by the rotation axis 211 within the seal 210 in a speed of about 1500rpm, the inlet liquid silicon source is coming out from the ditributor 208 inside a rotor 213 and swing out by the high gravity force, in the way of outgoing, the liquid is become droplet or thin film by the spongy metal filler 207 in the rotor 213, so that the gas state impurities are again easily separated and are pumping out via the gas outlet 202, no bubble nor solution can exist in the liquid state silicon source material. Oxygen is reacted in a lower temperature with the Si-H bond in trichlorosilane by mass transfer in the spongy metal filler 207 to form a SiOH species which in turn complexes impurities such as BCl₃ or PCl₃ present in the trichlorosilane, and form impurity containing siloxane complexes. The liquid state silicon source material 205 is coming out via the silicon source material outlet 206 for distillation.

The process of purifying silicon source materials is as follow: First stage, the silicon source materials including trichlorosilane is cooled down to a temperature lower than the boiling point of silicon source material, for trichlorosilane it is 32°C, then feed to the silicon source inlet 101 of a first high gravity rotating packed bed 100, the flow rate for 1,250 ton/year of poly silicon is 195 g/sec of trichlorosilane, the rotating speed of the rotor 113 is about 1.500 rpm, as the liquid state trichlorosilane go throw the spongy metal filler 107, the liquid is become droplet or thin film and the gas state impurities such as PH₃, B₂H₆ or SiH₄ are easily separated and are pumping out via the gas outlet 102. In this stage, no oxygen is used, preventing oxygen reacts with PH₃, B₂H₆ or SiH₄ etc. Second stage, the silicon source material coming out from the silicon source material outlet 106 is then fed to a second high gravity rotating packed bed 200 and oxygen is now applied to the oxygen inlet 203, oxygen is present in a ratio with trichlorosilane of about 0.005 to 0.5 mole by control the flow rate of trichlorosilane and oxygen. For example, for production of 1,250 ton/year poly silicon, the flow rate of trichlorosilane is 195 g/sec, 0.01 mole of oxygen is 0.375 g/sec. Thus oxygen is reacted in a lower temperature with the Si-H bond in trichlorosilane by mass transfer in the spongy metal filler 107 to form a SiOH species which in turn complexes impurities such as BCl₃ or PCl₃ present in the trichlorosilane, and form impurity containing siloxane complexes, this complexes is less volatile compare with trichlorosilane. Then trichlorosilane is easily accomplished during a subsequent one distillation step which separates the purified trichlorosilane form the less volatile complex boron or phosphorous compounds.

## Claims

1. A process for purification of silicon source material including trichlorosilane by two high gravity rotating packed beds, for removing impurities including one or more of boron, phosphorous, in the form of chlorides, hydrides, or intermediate compounds containing both hydrogen and chlorine from said silicon source material, comprising the steps of:
passing said silicon source material in liquid state through a first high gravity rotating packed bed with spongy metal, said first high gravity rotating packed bed is at a temperature lower than the boiling point of said silicon source material, no gas is fed to said first high gravity rotating packed bed, the impurities hydrides vapor and the other chlorosilane or silane with lower boiling point than said silicon source material are separated by pumping out for re-use or abandonment, the output of said silicon source material is fed to the input of a second high gravity rotating packed bed;
passing said silicon source material in liquid state through a second high gravity rotating packed bed with spongy metal, said second high gravity rotating packed bed is at a temperature lower than the boiling point of said silicon source material, oxygen is also fed to said second high gravity rotating packed bed from the upper rim to form impurity containing siloxane complexes, the impurity hydrides vapor and the other chlorosilane or silane are separated once more by pumping out for re-use or abandonment;
collecting the liquid state purified silicon source material having impurities containing siloxane complexes with higher boiling point than said silicon source material;
using one distilling step to remove said siloxane complexes from said silicon source material.

2. A process of claim 1, wherein said silicon source material including trichlorosilane and silicon tetrachloride.

3. A process of claim 1, wherein said oxygen is present in a ratio with trichlorosilane of about 0.005 to 0.5 mole.

4. A process of claim 1, wherein the flow rates of the silicon source inlet and the oxygen inlet of said second high gravity rotating packed bed can be controlled.

## Patentansprüche

1. Verfahren zur Reinigung von Siliciumquellmaterial einschließlich Trichlorsilan durch zwei rotierende Festbetten mit hoher Schwerkraft zur Entfernung von Verunreinigungen einschließlich einem oder mehreren aus Bor, Phosphor, in der Form von Chloriden, Hydriden, oder Zwischenverbindungen, die beides, Wasserstoff und Chlor enthalten, aus dem Siliciumquellmaterial, umfassend die Schritte:
Leiten des Siliciumquellmaterials in flüssigem Zustand durch ein erstes rotierendes Festbett mit schwammartigem Metall mit hoher Schwerkraft, wobei das erste rotierende Festbett mit hoher Schwerkraft sich bei einer Temperatur unterhalb dem Siedepunkt des Siliciumquellmaterials befindet, wobei kein Gas in das erste rotierende Festbett mit hoher Schwerkraft eingespeist wird, die Verunreinigungen Hydriddampf und das andere Chlorsilan oder Silan mit niedrigerem Siedepunkt als dem Siliciumquellmaterial abgetrennt werden durch Auspumpen zur Wiederverwendung oder Aufgabe, die Ausgabe des Siliciumquellmaterials zum Einlass eines zweiten rotierenden Festbetts mit hoher Schwerkraft gespeist wird;
Leiten des Siliciumquellmaterials in flüssigem Zustand durch ein zweites rotierendes Festbett mit schwammartigem Metall mit hoher Schwerkraft, wobei das zweite rotierende Festbett mit hoher Schwerkraft sich bei einer Temperatur unterhalb dem Siedepunkt des Siliciumquellmaterials befindet, Sauerstoff ebenfalls dem zweiten rotierenden Festbett mit hoher Schwerkraft vom oberen Rand zugeführt wird zur Bildung Siloxankomplexe enthaltender Verunreinigung, wobei die Verunreinigung Hydriddampf und das andere Chlorsilan oder Silan erneut abgetrennt werden durch Auspumpen zur Wiederverwendung oder Aufgabe;
Sammeln des gereinigten Siliciumquellmaterials im flüssigen Zustand, das Siloxankomplexe mit höherem Siedepunkt als dem Siliciumquellmaterial enthaltende Verunreinigungen aufweist;
Anwenden eines Destillierschrittes, um die Siloxankomplexe aus dem Siliciumquellmaterial zu entfernen.

2. Verfahren nach Anspruch 1, wobei das Siliciumquellmaterial Trichlorsilan und Siliciumtetrachlorid beinhaltet.

3. Verfahren nach Anspruch 1, wobei der Sauerstoff in einem Verhältnis mit Trichlorsilan von etwa 0,005 bis 0,5 Mol vorliegt.

4. Verfahren nach Anspruch 1, wobei die Strömungsraten des Siliciumquelleinlasses und des Sauerstoffeinlasses des zweiten rotierenden Festbettes mit hoher Schwerkraft reguliert werden können.

## Revendications

1. Procédé de purification de matériau de source de silicium comprenant du trichlorosilane par deux lits tassés en rotation à haute gravité, pour enlever des impuretés comprenant un ou plusieurs du bore, du phosphore, sous la forme de chlorures, d'hydrures ou de composés intermédiaires contenant de l'hydrogène et du chlore dudit matériau de source de silicium, comprenant les étapes de :
le passage dudit matériau de source de silicium à l'état liquide à travers un premier lit tassé en rotation à haute gravité pourvu d'un métal spongieux, ledit premier lit tassé en rotation à haute gravité est à une température inférieure au point d'ébullition dudit matériau de source de silicium, aucun gaz n'est fourni au dit premier lit tassé en rotation à haute gravité, les impuretés de vapeur d'hydrures, de chlorosilane et de silane avec un point d'ébullition inférieur à celui dudit matériau de source de silicium sont séparées par pompage pour être réutilisées ou abandonnées, la sortie dudit matériau de source de silicium est fournie à l'entrée d'un deuxième lit tassé en rotation à haute gravité ;
le passage dudit matériau de source de silicium à l'état liquide à travers un deuxième lit tassé en rotation à haute gravité pourvu d'un métal spongieux, ledit deuxième lit tassé en rotation à haute gravité est à une température inférieure au point d'ébullition dudit matériau de source de silicium, de l'oxygène est également fourni au dit deuxième lit tassé en rotation à haute gravité à partir du bord supérieur pour former des impuretés contenant des complexes de siloxane, les impuretés de vapeur d'hydrures, de chlorosilane et de silane sont à nouveau séparées par pompage pour être réutilisées ou abandonnées ;
la collecte du matériau de source de silicium purifié à l'état liquide comportant des impuretés contenant des complexes de siloxane avec un point d'ébullition supérieur à celui dudit matériau de source de silicium ;
l'utilisation d'une étape de distillation pour enlever lesdits complexes de siloxane dudit matériau de source de silicium.

2. Procédé selon la revendication 1, dans lequel ledit matériau de source de silicium comprend du trichlorosilane et du tétrachlorure de silicium.

3. Procédé selon la revendication 1, dans lequel ledit oxygène est présent à un taux d'environ 0,005 à 0,5 mole par rapport au trichlorosilane.

4. Procédé selon la revendication 1, dans lequel les débits de l'entrée de source de silicium et de l'entrée d'oxygène dudit deuxième lit tassé en rotation à haute gravité peuvent être régulés.
